(19) Europäisches Patentamt

European Patent Office

Office européen des brevets

(11) Publication number: **0 296 711 B1**

## (12) EUROPEAN PATENT SPECIFICATION

(45) Date of publication of patent specification :
04.09.91 Bulletin 91/36

(51) Int. Cl.⁵ : **B23B 45/14**

(21) Application number : **88304453.9**

(22) Date of filing : **17.05.88**

(54) **Portable power tool.**

(30) Priority : **22.06.87 US 64691**

(43) Date of publication of application :
**28.12.88 Bulletin 88/52**

(45) Publication of the grant of the patent :
**04.09.91 Bulletin 91/36**

(84) Designated Contracting States :
**AT BE CH DE ES FR GB GR IT LI LU NL SE**

(56) References cited :
**DE-A- 3 138 516**
**US-A- 3 890 058**

(73) Proprietor : **Yang, Tai-Her**
**5-1 Taipin Street**
**Si-Hu Town Dzan-Hwa (TW)**

(72) Inventor : **Yang, Tai-Her**
**5-1 Taipin Street**
**Si-Hu Town Dzan-Hwa (TW)**

(74) Representative : **Arthur, Bryan Edward et al**
**Withers & Rogers 4 Dyer's Buildings Holborn**
**London EC1N 2JT (GB)**

## Description

The invention relates to portable power tools and in particular to electric drills. Such drills normally comprise a body provided with handles, and housing an electric motor together with gearing through which the motor drives a chuck. Such a tool will be referred to herein as a power drill, notwithstanding that other tools, for example grinding wheels, ring cutters, reamers etc, may be fitted into the chuck in place of the drill bit.

It is known to provide a bench stand to which such a power drill may be fitted so that it may be used as a bench drill, in addition to its normal use as a hand held tool.

The present invention, which is defined in the claims appended hereto, aims at providing a compact and convenient tool capable of alternative uses in this manner.

An example of the invention will now be described with reference to the accompanying drawings, in which :

Figure 1 is an exploded view showing the essential parts of a tool according to the invention ;

Figure 2 shows the tool assembled for hand use and

Figure 3 shows the tool assembled as a bench drill.

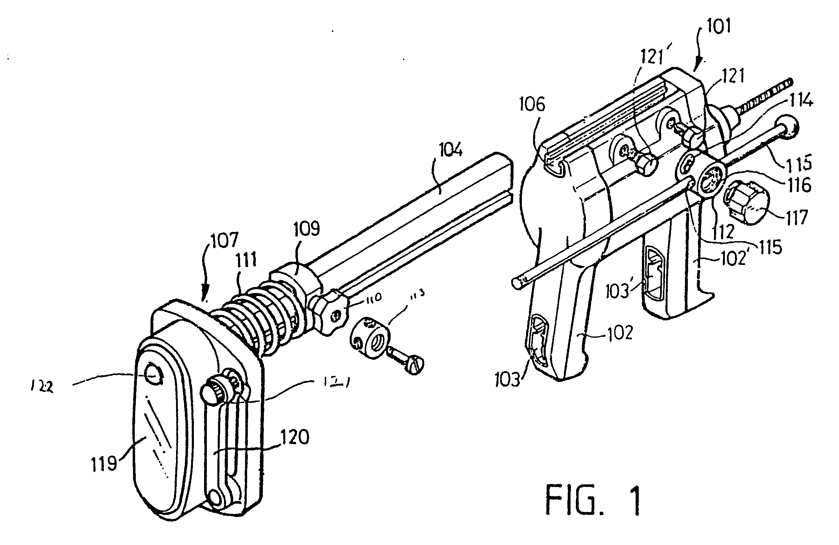

Referring first to figure 1, the tool comprises a power drill main body 101 provided with a handle 102 with the usual trigger type on/off switch (not visible in the drawing). The body also carries a second projection 102', which may be shaped with a grip to form a second handle, lying in the same plane as the handle 102. A pair of apertures 103, 103' are formed in these handles through which the beam 104 of a mounting member about to be described, may be passed parallel to the axis of the drill chuck and on which the drill forms a sliding fit.

The mounting member comprises a beam 104 mounted on an endpiece 107. The beam as has been mentioned, is a sliding fit in the apertures 103, 103' and may be formed with grooves or ridges, in which case the apertures may be provided with matching projections or grooves. The beam carries a sliding ring 109 which may be locked by a clamping screw 110 and which carries a pivoted collar 113. The end piece 107 on the side remote from the beam 104 carries a padded shoulder rest 119 shaped like the end of a rifle-butt.

The top of the drill body, that is to say the side remote from the handles 102, 102', is formed with a channel 106 into which the end of the beam 104 can slide and in which it can be clamped by a pair of set screws 121, 121'. Grooves or ridges on the beam 104 engage corresponding ridges or grooves in the channel 106. The drill body also has a side handle, comprising an internally screw boss 112 into which a knob 117 can be screwed. The boss 112 has a hole through it through which a rod 115 can be slid and clamped by tightening the knob 117. The rod 115 has a ball at one end and is screw-threaded at the other ; the boss 112 also has an oblique hole 114 of elongated section. The purpose of these details will be explained below.

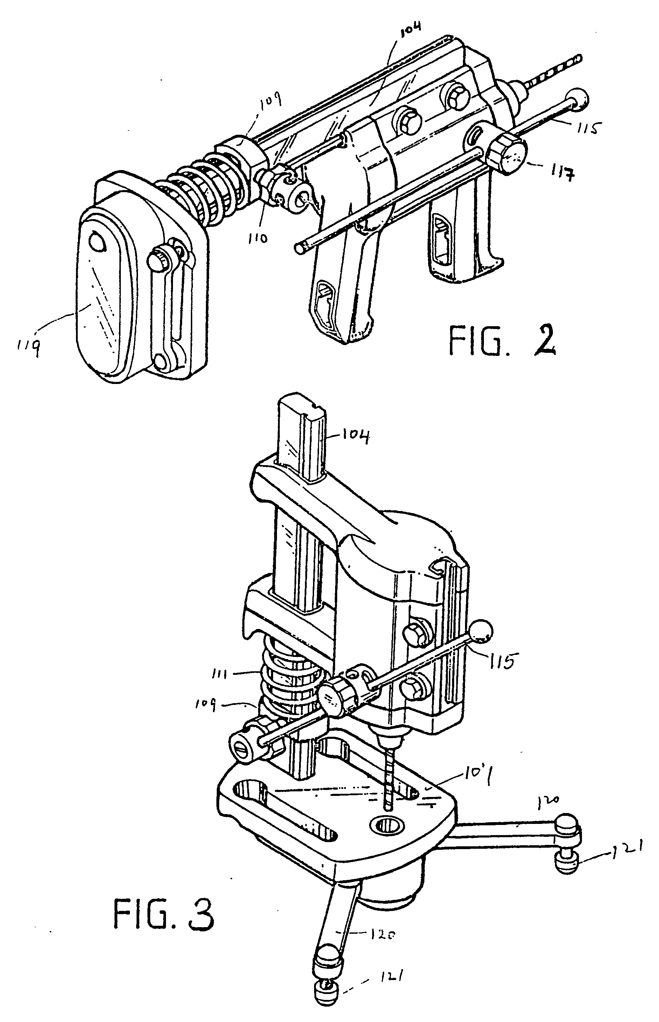

Refer now to Fig. 2, which shows one position of use of the tool of invention. In this position the beam 104 has been inserted into the slot 106 and clamped in position by tightening the screws 121, 121'. The screw 110 has been tightened, so that the clamping ring 109 merely retains the spring 111, which is inoperative in this particular configuration, on the beam. The device is now used as a drill, the padded shoulder piece 119 being rested against the operator's shoulder to enable additional pressure to be applied comfortably to the drill, and the rod 115, clamped by tightening the knob 117, serves as a stop or depth gauge to control the depth of drilling.

Referring now again to Figure 1, the power tool of the invention contains further features which enable it to be used as a vertical bench drill. The end piece 107 carries a pair of pivoted legs, one of which, 102, is visible in the figure, and each of these carries a levelling screw 121 at its extremity. The shoulder piece 119 also carries a stud 122 which, in the vertical drilling assembly position of the tool of the invention, acts as a foot.

Refer now to Figure 3, which shows the tool of the invention assembled as a vertical bench drill. The pivoted legs 120 have been swung outwards, so that the mounting member is resting on the stud 122 (not shown in figure 3) and on the two leveling screws 121. The spring 111 and the clamping ring 109 have been interchanged in position and placed on the beam 104, which is now upright, and the portable drill body rests on the spring 111 with the beam 104 passing through the holes 103, 103'. The rod 115 passes through the elongated holes 114 in the boss 112 which allow it some freedom of rotation, and the threaded end is screwed into the pivoted collar 113.

As will be seen, the arrangement now forms a vertical bench drill in which the endpiece 107 forms the drill table and the drill is movable up and down against the balancing force of the spring 111 by moving the rod 115 to control the vertical movement, the ball now acting as a handle.

## Claims

1. A portable power tool (101) comprising a power drill and a mounting member for the drill comprising a beam (104) and an endpiece (107) attached to one end of the beam, the mounting member being attachable to the drill in a first, fixed, position in which the end piece (107) provides a shoulder rest (119) for applying drilling pressure, and in a second position in which the drill is slidable along the beam (104) with its axis parallel to the beam and in which the endpiece (107) forms a base for maintaining the beam in an upright position for vertical drilling.

2. A portable power tool according to claim 1 in which handle (102) of the power drill is provided with an aperture (103) and the drill carries a projecting portion (102') formed with a corresponding aperture (103'), the apertures each being shaped to admit the beam (104) of the mounting member when the tool is assembled in the second position.

3. A portable power tool according to claim 1 or claim 2 in which the endpiece (107) of the mounting member is provided with a stud (122) and a pair of folding feet (120) which may be extended so as to provide a three-point support for the tool when assembled in the second position.

4. A portable power tool according to any preceding claim in which the endpiece (107) is provided with a padded member (119) to form the shoulder rest.

5. A portable power tool according to any preceding claim in which the power drill is provided with a boss (112) on one side, the boss having a first opening through which a rod (115) may be passed and clamped parallel to the drill axis to serve as a depth gauge when the tool is used in its first position, and a second opening (114) through which the rod (115) may be passed with freedom of rotational movement so as to serve as a operating handle for the vertical movement of the drill in its second position.


**Patentansprüche**

1. Tragbares Elektrowerkzeug mit einer elektrischen Bohrmaschine und einem Halterungsteil für die Bohrmaschine, der eine Führungsschiene und ein an deren einem Ende befestigtes Endstück aufweist, wobei das Halterungsteil an der Bohrmaschine in einer ersten Stationärposition, in der das Endstück eine Schulterstütze zum Aufbringen eines Druckes für die Bohrarbeit bildet, und in einer zweiten Position befestigt werden kann, in der die Bohrmaschine mit zu der Führungsschiene paralleler Achse entlang der Führungsschiene verschiebbar ist, und in der das Endstück einen Fuß zum Halten der Führungsschiene in einer aufrechten Position für das Vertikalbohren bildet.

2. Tragbares Elektrowerkzeug nach Anspruch 1, wobei der Handgriff der elektrischen Bohrmaschine mit einer Öffnung versehen ist und die Bohrmaschine einen abstehenden Teil aufweist, der mit einer entsprechenden Öffnung versehen ist, wobei jede der Öffnungen zum Aufnehmen der Führungsschiene des Halterungsteils, falls das Elektrowerkzeug in der zweiten Position zusammengebaut ist, gestaltet ist.

3. Tragbares Elektrowerkzeug nach Anspruch 1 oder 2, wobei das Endstück des Halterungsteils mit einem Noppen und einem Paar von Klappfüßen versehen ist, die derart geöffnet werden können, daß für das Elektrowerkzeug eine Dreipunktabstützung gebildet wird, falls das Elektrowerkzeug in der zweiten Position zusammengebaut ist.

4. Tragbares Elektrowerkzeug nach einem der vorstehenden Ansprüche, wobei das Endstück zum Ausbilden der Schulterstütze mit einem gepolsterten Teil versehen ist.

5. Tragbares Elektrowerkzeug nach einem der vorstehenden Ansprüche, wobei die elektrische Bohrmaschine an ihrer einen Seite mit einem Gewindeauge versehen ist, das eine erste Öffnung, in welche eine Stange eingeführt und dort parallel zu der Achse der Bohrmaschine festgeklemmt werden kann, damit die Stange bei Benutzung des Elektrowerkzeugs in dessen ersten Position als Anschlag zum Begrenzen der Bohrtiefe dient, und eine zweite Öffnung aufweist, in welche die Stange mit Schwenkspiel eingeführt werden kann, so daß die Stange als Bedienungshebel für die vertikale Bewegung der Bohrmaschine in deren zweiten Position dient.


**Revendications**

1. Outil portatif à moteur (101) comprenant une perceuse à moteur et un organe de montage pour la perceuse, comprenant un bras (104) et une pièce d'extrémité (107) fixée à l'une des extrémités du bras, l'organe de montage étant apte à être fixé sur la perceuse, dans une première position, fixée, dans laquelle la pièce d'extrémité (107) constitue une pièce d'appui d'épaule (119) pour appliquer une pression de perçage, et dans une seconde position dans laquelle la perceuse est coulissante le long du bras (104) avec son axe parallèle au bras, et dans laquelle la pièce d'extrémité (107) constitue une base pour maintenir le bras en position verticale pour un perçage vertical.

2. Outil portatif à moteur suivant la revendication 1, dans lequel une poignée (102) de la perceuse à moteur est pourvue d'un trou (103), la perceuse ayant un appendice (102') comportant un trou correspondant (103'), les ouvertures étant toutes deux conformées afin de recevoir le bras (104) de l'organe de montage, lorsque l'outil est monté dans la seconde position.

3. Outil portatif à moteur suivant la revendication 1 ou 2, dans lequel la pièce d'extrémité (107) de l'organe de montage comporte un téton (122) et deux pieds repliables (120) qui peuvent être étendus de façon à réaliser un support en trois points pour l'outil lorsque celui-ci est monté dans la seconde position.

4. Outil portatif à moteur suivant l'une quelconque des revendications précédentes, dans lequel la pièce d'extrémité (107) est pourvue d'un organe à tampon (119) pour constituer l'appui d'épaule.

5. Outil portatif à moteur suivant l'une quelconque des revendications précédentes, dans lequel la perceuse à moteur comporte d'un côté un bossage (112), ayant une première ouverture à travers laquelle peut être disposée et serrée une tige (115) parallèle à l'axe de la perceuse pour servir de jauge de profondeur lorsque l'outil est utilisé dans sa première position, et une seconde ouverture (114) à travers laquelle la tige (115) peut être disposée avec une liberté de rotation afin de servir de poignée d'actionnnement pour le déplacement vertical de la perceuse, dans sa seconde position.

FIG. 1

FIG. 2

FIG. 3